# EUROPÄISCHE PATENTSCHRIFT

(11) **EP 3 160 854 B1**
(45) Veröffentlichungstag und Bekanntmachung des Hinweises auf die Patenterteilung: **23.05.2018**
(21) Anmeldenummer: 15730743.0
(22) Anmeldetag: 16.06.2015
(51) Int. Cl.: B65D 1/02, B65D 1/20, B65D 21/02, B65D 23/10, B65D 25/28, B65D 83/00, B65D 1/44

(54) **BEHÄLTER FÜR FLÜSSIGES WASCHMITTEL UND VERFAHREN ZUR DOSIERTEN ABGABE VON WASCHMITTEL AUS DEM BEHÄLTER**
CONTAINER FOR LIQUID DETERGENT AND METHOD FOR THE METERED DISPENSING OF DETERGENT FROM THE CONTAINER
RÉCIPIENT POUR DÉTERGENT LIQUIDE ET PROCÉDÉ DE DISTRIBUTION DOSÉE DE DÉTERGENT DEPUIS LE RÉCIPIENT

(30) Priorität: 30.06.2014 DE 102014212601
(43) Veröffentlichungstag der Anmeldung: 03.05.2017
(73) Patentinhaber: Henkel AG & Co. KGaA, 40589 Düsseldorf (DE)
(72) Erfinder: GERHARDS, Katja, 40547 Düsseldorf (DE); THEUMERT, Gerhard Josef, 40215 Düsseldorf (DE); GKORTZA, Asimina, 32300 Orchomenos (GR); GEBERZAHN, Rainer, 41363 Jüchen (DE)
(86) Internationale Anmeldenummer: PCT/EP2015/063459
(87) Internationale Veröffentlichungsnummer: WO 2016/000953

(56) Entgegenhaltungen:
- EP-A1- 0 157 673
- EP-A1- 0 322 259
- EP-A1- 1 033 314
- WO-A1-94/24011
- WO-A1-2014/044306
- WO-A1-2015/073794
- FR-A1- 2 985 503
- GB-A- 887 893
- US-A1- 2003 068 410
- US-A1- 2004 099 672
- US-A1- 2005 247 739
- US-A1- 2006 065 619
- US-A1- 2007 045 223

## Beschreibung

Die Erfindung betrifft einen Behälter für flüssiges Waschmittel, der einen Behältergrundkörper zur Aufnahme des Waschmittels und eine Öffnung zur Abgabe des Waschmittels umfasst. Ein unabhängiger Anspruch betrifft ein Verfahren zur dosierten Abgabe von Waschmittel aus einem solchen Behälter.

Bei bekannten Behältern für Waschmittel mit einem Fassungsvermögen von mehreren Litern kann zwischen Kanistern insbesondere mit einem Ausgabehahn sowie Behältern mit einer Ausgießöffnung unterschieden werden.

Kanister sind in der Regel sehr kostenintensiv und lohnen sich meist nur bei großen Gebinden. Im Einsatz bei den potentiellen Anwendern benötigen sie jedoch viel Raum, was die Akzeptanz durch den Anwender einschränkt.

Behälter mit Ausgießöffnung weisen in der Regel einen Standboden auf, der gegenüber der Ausgießöffnung angeordnet ist. Zur Befüllung stehen die Behälter auf dem Standboden und werden über besagte Ausgießöffnung von oben befüllt.

Um Waschmittel aus dem Behälter abzugeben, muss der Anwender den auf dem Standboden stehenden Behälter anheben und kippen. Zum Anheben des Behälters verwendet er dabei üblicherweise einen Griff, der zumeist seitlich an dem Behältergrundkörper angebracht ist. Eine kontrollierte Abgabe des Waschmittels ist dabei für den Anwender schwierig, da er einerseits ausreichend Kraft zum Anheben bzw. Kippen des Behälters einsetzen muss und andererseits die Kippbewegung des Behälters genau führen muss, damit das Waschmittel in dosierter Menge das gewünschte Ziel auch ohne Verschütten erreicht.

Aus der WO 94 / 24011 A1 geht ein Behälter zum Aufbewahren und Ausgeben von Flüssigkeit hervor, der einen Behältergrundkörper zur Aufnahme der Flüssigkeit umfasst sowie eine Abgabeöffnung und zwei unterschiedliche, nebeneinander liegende Standböden für Befüllung und Lagerung. Ein Griffbereich dieses Behälters erstreckt sich von einer dem zweiten (Lagerungs-)Standboden abgewandten Seite des Behälters, mit Abstand von dem Befüllungs-Standboden, in Richtung der Abgabeöffnung. Der Behälter hat auch eine Rollfläche, die gegenüber dem Griffbereich angeordnet ist und sich im Wesentlichen von dem zweiten Standboden bis zur Öffnung erstreckt. Eine Besonderheit dieses Behälters ist, dass ein frühzeitiges Auslaufen der Flüssigkeit durch die Erzeugung eines luftdichten Raums in dem Behälter erzeugt wird.

Die WO 2014/044 306 A1 offenbart einen Behälter für Flüssigkeit, umfassend einen Körper, der einen Hohlraum definiert, in dem Flüssigkeit gespeichert werden kann, wobei der Körper eine Öffnung aufweist, die einen Zugang in den Hohlraum erlaubt.

In der EP 0 157 673 A1 ist ein vorgefüllter Behälter offenbart der einen hohlen Griff aufweist, der, wenn er aufgerissen wird, gleichzeitig eine Auslassöffnung für Flüssigkeit und eine Einlassöffnung für nachfließende Luft erzeugt.

Die US 2007 / 045 223 A1 zeigt einen Plastikbehälter der eine Griffregion mit zur besseren manuellen Greifbarkeit aufweist.

Die US 2006 / 065 619 A1 offenbart einen Plastikbehälter mit einem vom Grundkörper abstehenden Griff der eine Ausnehmung aufweist.

Der Erfindung liegt daher die Aufgabe zu Grunde, einen Behälter für flüssiges Waschmittel bereitzustellen, der ein großes Fassungsvermögen aufweist und der eine einfache Handhabung beim Befüllen mit und bei der Abgabe von dem flüssigen Waschmittel ermöglicht.

Die der Erfindung zu Grunde liegende Aufgabe wird mit der Merkmalskombination gemäß Anspruch 1 gelöst. Ausführungsbeispiele der Erfindung können den von Anspruch 1 abhängigen Unteransprüchen entnommen werden.

Der Behälter gemäß Anspruch 1 umfasst neben dem Behältergrundkörper zur Aufnahme des flüssigen Waschmittels und der Öffnung zur Abgabe des flüssigen Waschmittels einen ersten Standboden und einen zweiten Standboden. Der erste Standboden ist gegenüber der Öffnung angeordnet und definiert eine Füllstellung des Behälters. Neben dem ersten Standboden ist der zweite Standboden angeordnet, der eine Lagerstellung des Behälters definiert. Des Weiteren umfasst der erfindungsgemäße Behälter einen Griffbereich, der sich von einer dem zweiten Standboden abgewandten Seite des ersten Standbodens in Richtung der Öffnung erstreckt. Zudem ist eine Rollfläche vorgesehen, die gegenüber dem Griffbereich angeordnet ist und sich im Wesentlichen von dem zweiten Standboden bis zur Öffnung erstreckt. Der Griffbereich weist dabei einen Abschnitt auf, der oberhalb des zweiten Standbodens angeordnet ist, wenn der Behälter in Lagerstellung auf dem zweiten Standboden steht.

Die Rollfläche, die sich von dem zweiten Standboden in Richtung der Öffnung erstreckt, dient dabei als Auflagefläche des Behälters auf einem Untergrund, wenn der Behälter ausgehend von der Lagerstellung gekippt wird, um Waschmittel durch die Öffnung des Behälters abzugeben. Somit ist es möglich, dass bei der Abgabe des Waschmittels das Gewicht des Behälters mit seinem Inhalt nicht durch den Anwender gehalten werden muss, was die Handhabung des Behälters entsprechend erleichtert. Der gegenüber der Rollfläche angeordnete Griffbereich ermöglicht die sichere Führung des Behälters bei der Abgabe des Waschmittels, wobei die den Griffbereich haltende Hand des Anwenders während der Abgabe entlang des Griffbereichs gleiten kann bzw. an verschiedenen Stellen des Griffbereichs zum Kippen des Behälters angesetzt werden kann. Insbesondere kann der Anwender seine Hand auch in dem Abschnitt des Griffbereichs ansetzen oder dorthin gleiten lassen, der oberhalb des zweiten Standbodens angeordnet ist. Je nach Lage der Hand bezogen auf den Griffbereich kann der Anwender somit selber den Hebel bestimmen, den die führende Hand zur Kippachse des Behälters aufweist. Dies erleichtert die Handhabung des Behälters entscheidend. Da beim Kippen der Behälter mit seiner Rollfläche an dem Untergrund abrollt, verändert sich mit dem Kippwinkel auch die Lage der Kippachse. Die Kippachse wandert mit größer werdendem Kippwinkel entlang der Rollfläche in Richtung Öffnung.

Das Fassungsvermögen des Behältergrundkörpers kann zwei bis acht Liter betragen. Ein bevorzugter Bereich für das Fassungsvermögen liegt zwischen fünf und sieben Liter.

Der erste Standboden kann eine erste Standebene und der zweite Standboden kann eine zweite Standebene definieren, wobei ein Winkel zwischen der ersten Standebene und der zweiten Standebene 20 bis 40 Grad, vorzugsweise 30 bis 40 Grad, beträgt. Befindet sich beispielsweise der Behälter in der Füllstellung, d.h. er steht auf dem ersten Standboden, muss der Behälter um genau diesen Winkel gekippt werden, um ihn in die Lagerstellung zu überführen, in der er auf dem zweiten Standboden steht.

Der erste Standboden und der zweite Standboden können unmittelbar aneinander angrenzen und eine gemeinsame Kante bilden. In einem Ausführungsbeispiel der Erfindung ist dieser Kante abgerundet.

Der zweite Standboden kann eine konkave Wölbung aufweisen, die mit einer konvexen Wölbung an einer dem zweiten Standboden gegenüberliegenden Seite des Behälters korrespondiert. Somit kann, wenn sich der Behälter in der Lagerstellung befindet, ein weiterer Behälter auf diesen Behälter zwecks Stapelung gestellt werden. Die konkave Wölbung des zweiten Standbodens sorgt nicht nur für eine geringere Stapelhöhe, sondern auch für einen sicheren Sitz zwischen den übereinander angeordneten Behälter.

In einem Ausführungsbeispiel der Erfindung ist die Rollfläche im Wesentlichen bogenförmig mit hervorstehenden Elementen ausgebildet, wobei jeweils zwei benachbarten Elementen eine bestimmte Schwenkposition des Behälters zugeordnet werden kann. Die hervorstehenden Elemente können Rippen, Linien, Noppen oder Punkte sein. Kippt der Anwender den Behälter und rollt ihn dabei auf der Rollfläche ab, so können die auf der Rollfläche angeordneten Elemente die Abrollbewegung entlang der Rollfläche in einzelne Bewegungsstufen aufteilen, die der Anwender durch die den Griffbereich haltende Hand auch haptisch erfassen kann. Der Abstand benachbarter Elemente kann dabei so festgesetzt werden, dass unabhängig vom Schwenkwinkel des Behälters immer die gleiche Menge an Waschmittel abgegeben wird, wenn der Behälter von einer Bewegungsstufe zur nächsten Bewegungsstufe geschwenkt wird. Mit anderen Worten wird die Abrollbewegung entlang der Abrollfläche in spürbare kleine Raster aufgeteilt, wobei der Übergang von einem Raster zum nächsten Raster mit einer bestimmten Waschmittelmenge korrespondiert, die dabei aus der Öffnung fließt.

Zusätzlich zu dem Griffbereich kann ein Griff vorgesehen sein, der schwenkbar an dem Behälter angelenkt ist. Eine Schlaufe des Griffs kann einstückig über ein Filmscharnier mit dem Behältergrundkörper verbunden sein. Dies erleichtert die Handhabung des Behälters, da zusätzlich zum Griffbereich der Behälter über den Griff gehalten bzw. geführt werden kann. In einem bevorzugten Ausführungsbeispiel ist das Filmscharnier diametral gegenüber dem ersten Standboden angeordnet, der die Füllstellung definiert. Wird der Behälter aus der Füllstellung angehoben, liegt somit das Filmscharnier oberhalb des ersten Standbodens. Der Behälter kann somit momentenfrei angehoben werden, ohne dass sich der Behälter dabei in eine andere Lage kippt.

Vorteilhaft ist die Gestaltung des Griffes derart, dass insbesondere die vier Finger der Hand des Anwenders nebeneinander Platz finden, so dass der Anwender den Griff beispielsweise im Kraftgriff umschließen kann. Dabei ist der Griff vorzugsweise mit Angriffsmulden für die Finger (der menschlichen Hand) ausgestattet, die eine ergonomische Angriffsmöglichkeit ermöglichen.

Der Griffbereich kann integraler Bestandteil des Behältergrundkörpers sein. Vorzugsweise wird der Behältergrundkörper in einem Blasformverfahren hergestellt. Der Behältergrundkörper kann aus Kunststoff, insbesondere PET, gefertigt sein.

Zur Ausbildung des Griffbereichs kann der Behältergrundkörper eine erste Griffeinbuchtung an einer Seitenwand und eine zweite Griffeinbuchtung an einer anderen Seitenwand aufweisen. Dies führt zu einer reduzierten Breite des Behältergrundkörpers im Griffbereich, was auch bei breit ausgeführten Behältern ein Umgreifen des Behälters mit einer Hand ermöglicht.

Die Rollfläche kann einen Anschlag aufweisen, der als Wegrollschutz dient. Durch diesen Anschlag wird vermieden, dass beim Kippen des Behälters dieser nicht über einen bestimmten Kippwinkel hinausgeht bzw. unbeabsichtigt wegrollt.

Eine weitere Aufgabe der Erfindung, ein Verfahren zur dosierten Abgabe von flüssigem Waschmittel aus dem Behälter bereitzustellen, wird durch Anspruch 11 gelöst. Eine bevorzugte Ausführung des erfindungsgemäßen Verfahrens kann Anspruch 12 entnommen werden.

Erfindungsgemäß wird, soweit sie verschlossen ist, die Öffnung geöffnet und ausgehend von der Lagerstellung der Behälter in Richtung der Rollfläche gekippt oder geschwenkt, wobei bei weiterer Schwenkbewegung die Rollfläche auf einem Untergrund abgerollt wird und der Behälter dabei mit dem Untergrund in Kontakt bleibt. Vorzugsweise wird in Abhängigkeit vom Füllgrad und in Abhängigkeit vom Schwenkwinkel die Hand an unterschiedlichen Stellen des Griffbereichs angesetzt bzw. entlang des Griffbereichs geführt. Beim Abrollen auf der Rollfläche können die hervorstehenden Elemente die Abrollbewegung in kleine fühlbare Stufen unterteilen, wobei der Übergang von einer Stufe zu einer nächsten Stufe mit der Abgabe einer bestimmten Waschmittelmenge verbunden ist.

Die Menge an flüssigem Waschmittel pro Abgabe kann ca. ein Prozent des Fassungsvermögens des Behältergrundkörpers betragen. In einer Ausführung der Erfindung lassen sich 50 bis 150 Waschladungen aus einem gefüllten Behälter entnehmen. Bei einem Fassungsvermögen von beispielsweise sechs Litern beträgt bei 100 Waschladungen die Menge pro Waschladung 6 Zentiliter (cl).

Anhand der in den Figuren dargestellten Ausführungsbeispiele wird die Erfindung näher erläutert. Es zeigen:
- Figur 1: eine Seitenansicht eines erfindungsgemäßen Behälters;
- Figur 2: den Behälter der Figur 1 in perspektivischer Ansicht;
- Figur 3: den Behälter der Figur 1 in weiteren Ansichten; und
- Figur 4: ein weiteres Ausführungsbeispiel für den erfindungsgemäßen Behälter in der Seitenansicht.

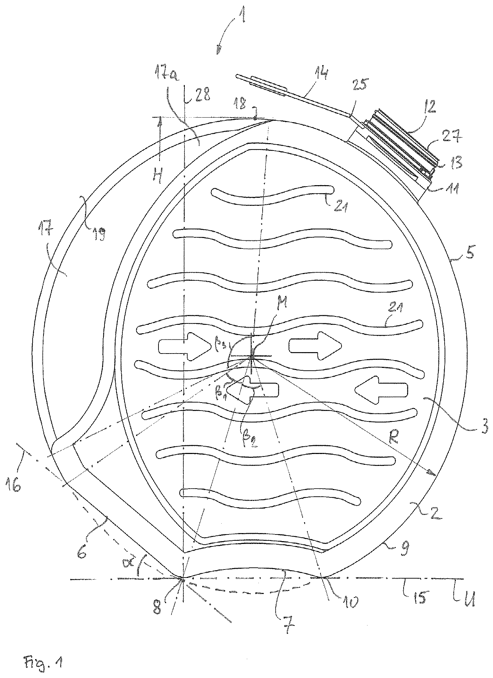

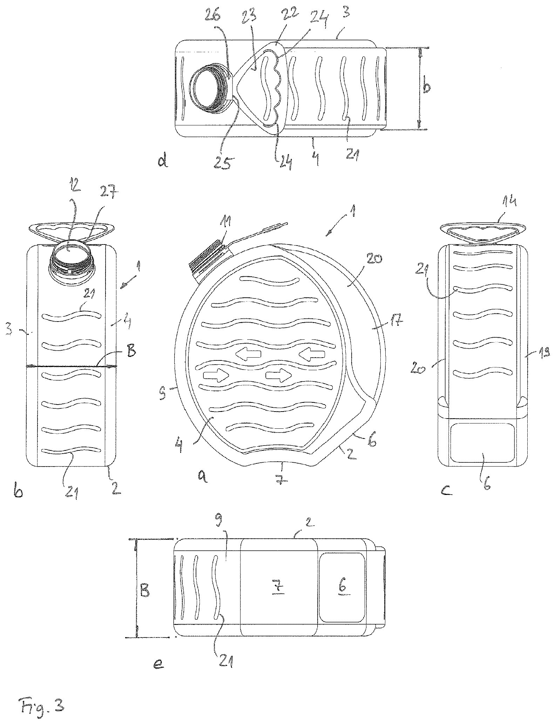

Die Figuren 1 bis 3 zeigen einen erfindungsgemäßen Behälter in verschiedenen Ansichten, der in seiner Gesamtheit mit 1 bezeichnet wird. Ein Behältergrundkörper 2 weist grob die Form eines flachen Zylinders oder einer Scheibe mit zwei im Wesentlichen ebenen Stirn- oder Seitenwänden 3, 4 auf. Figur 1 zeigt eine der beiden Seitenwände, nämlich die Seitenwand 3. In der Figur 3a, die eine Seitenansicht von der anderen Seite des erfindungsgemäßen Behälters 1 darstellt, ist die Seitenwand 4 zu erkennen. Der Abstand der zueinander parallelen Seitenwände 3, 4 definiert eine Breite B des Behälters 1 (siehe Figur 3e, die den Behälter 1 von unten zeigt). Die Breite B lässt sich auch aus den Figuren 3b (Vorderansicht) und 3c (Rückansicht) entnehmen.

Wie insbesondere der Figur 1 zu entnehmen ist, weist die Seitenwand 3 eine im Wesentlichen kreisrunde Form mit einem Radius R auf. Der Mittelpunkt des Kreises mit dem Radius R ist in Figur 1 mit M bezeichnet.

Die beiden Seitenwände 3, 4 sind durch eine umlaufende Mantelwand 5 verbunden. Die umlaufende Mandelwand 5 umfasst dabei mehrere Teilabschnitte, auf die im Folgenden näher eingegangen wird. So umfasst die umlaufende Mantelwand 5 einen ersten Standboden 6 und einen dazu benachbart angeordneten zweiten Standboden 7. Die Standboden 6, 7 bilden eine gemeinsame Kante, die mit 8 bezeichnet wird. An einer der Kante 8 abgewandten Seite schließt sich an dem zweiten Standboden 7 eine Rollfläche 9 an. Die Rollfläche 9 erstreckt sich von einer Kante 10 bis zu einem Ausgießstutzen 11. Der Ausgießstutzen 11 ist auf der umlaufenden Mantelwand 5 angeordnet und definiert eine Öffnung 12, durch die der Behälter 1 mit flüssigem Waschmittel befüllt werden kann. Durch die Öffnung 12 kann dann das in dem Behältergrundkörper befindliche Waschmittel auch wieder abgegeben werden. Der Ausgießstutzen 11 weist ein Außengewinde 13 auf, auf das eine hier nicht dargestellte Kappe mit einem Innengewinde zum Verschließen der Öffnung 12 geschraubt werden kann. An den Ausgießstutzen 11 ist einstückig ein Griff 14 angeformt.

Der zweite Standboden 6 erstreckt sich von der Kante 8 bis zur Kante 10. Die Verbindungslinie zwischen den Kanten 8, 10 definiert dabei eine zweite Standebene 15. Sie fällt mit einem Untergrund U zusammen, wenn sich der Behälter 1 in der hier gezeigten Stellung befindet. Die in Figur 1 dargestellte Stellung soll eine Lagerstellung sein. Wie der Figur 1 zu entnehmen ist, ist der zweite Standboden 7 gegenüber der zweiten Standebene 15 leicht nach innen gezogen, so dass eine konkave Wölbung entsteht.

Im Gegensatz zu dem leicht eingezogenen zweiten Standboden 7 ist der erste Standboden 6 eben ausgeführt. Der erste Standboden 6 definiert eine erste Standbene 16, die gegenüber der zweiten Standebene 15 einen Winkel α aufweist. Der Winkel α beträgt 36 Grad.

An einer der Kante 8 abgewandten Seite schließt sich an dem ersten Standboden 6 ein Griffbereich 17 an, der sich in etwa bis zu einem Punkt 18 erstreckt, der dem obersten Punkt des Behältergrundkörpers 2 entspricht, wenn sich der Behälter 1 in der Lagerstellung (auf den zweiten Standboden 7 stehend) befindet. Die Krümmung im Bereich des Punkts 18 entspricht der Krümmung der konkaven Wölbung des zweiten Standboden 7. Wenn zwei Behälter übereinander angeordnet werden, reduziert dies die Stapelhöhe und führt zu einem sicheren Sitz des oberen Behälters auf dem unteren Behälter.

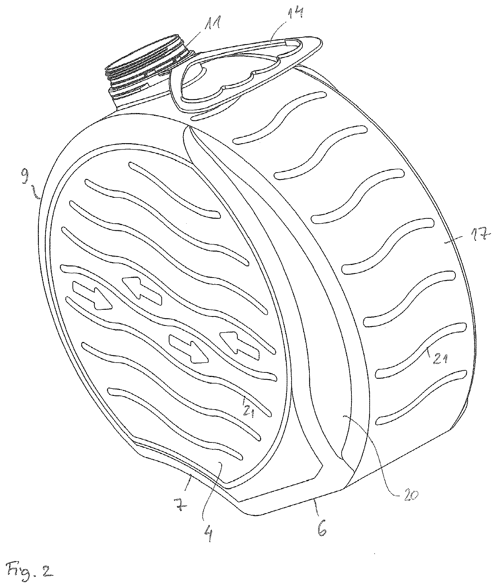

Im Griffbereich 17 weist der Behältergrundkörper 2 eine erste Griffeinbuchtung 19 (siehe Figur 1) und eine zweite Griffeinbuchtung 20 (siehe insbesondere Figur 2 und Figur 3a) auf. Die Griffeinbuchtungen 19, 20 führen zu einer verjüngten Mantelwand im Griffbereich 17, so dass eine menschliche Hand den Behältergrundkörper 2 im Griffbereich 17 von außen anliegend umgreifen kann, wobei in der ersten Griffeinbuchtung 18 beispielsweise der Daumen und in der zweiten Griffeinbuchtung 19 die restlichen 4 Finger der Hand zur Anlage kommen. Eine Breite der Mantelwand 5 im Griffbereich 17 ist in der Figur 3d, die die den Behälter von oben zeigt, mit b bezeichnet. Die Breite der Mantelwand 5 im Griffbereiche 17 beträgt bezogen auf die Breite B des Behältergrundkörpers 2 ca. 82 Prozent. Die Griffeinbuchtungen sind so geformt, dass die Hand entlang des Umfangs des Behältergrundkörpers entlang gleiten kann bzw. an unterschiedlichen Stellen ansetzen kann.

Eine Höhe H des Behältergrundkörpers 2 beträgt etwas weniger als das Zweifache des Radius R. Wie der Figur 1 zu entnehmen ist, ist die zweite Standebene 15 gegenüber dem Umfang (siehe gestrichelte Linie in der Figur 1) des Kreises mit dem Mittelpunkt M leicht zurück versetzt. Das gleiche gilt sinngemäß für die erste Standebene 16. Auch diese ist gegenüber dem Umfang des Kreises mit dem Mittelpunkt M leicht zurückgesetzt.

Die Seitenwände 3, 4 sowie die umlaufende Mantelwand 5 weisen mehrere Strukturverstärkungen in Form von wellenförmigen Vertiefungen 21 auf. Durch die Vertiefungen 21 erlangen die einzelnen Wände des Behältergrundkörpers 2 eine größere Steifigkeit, so dass insgesamt die Wanddicke der einzelnen Wände und somit der Materialeinsatz für den Behälter 1 klein gehalten werden kann.

Der Griff 14 weist eine dreieckige Schlaufe 22 mit abgerundeten Ecken (siehe Figur 3d) auf, wobei an einer Innenkante 23 der Schlaufe 22 vier Fingermulden 24 ausgebildet sind. Die Schlaufe 22 ist über ein Filmscharnier 25 gelenkig mit einem Befestigungsteil 26 des Griffs 14 verbunden, das fest an dem Ausgießstutzen 11 sitzt. Die Schlaufe 22, der Ausgießstutzen 11 und der Behältergrundkörper 2 sind in dem hier gezeigten Ausführungsbeispiel einstückig ausgebildet.

Wird in der Darstellung der Figur 1 der Behälter 1 um die Kante 8 gegen den Uhrzeigersinn gekippt, gelangt man zu einer Füllstellung des Behälters 1, in der der Behälter 1 auf dem ersten Standboden 6 steht. In dieser Füllstellung ist der Ausgießstutzen 11 nach oben gerichtet. Ein umlaufender Rand 27, der die Öffnung 12 begrenzt, liegt dabei in einer Ebene, die zu der ersten Standebene 16 parallel ist. In der Füllstellung lässt sich der Behälter 1 von oben in einfacher Weise befüllen. Erster Standboden 6 und Ausgießstutzen 11 sind bezogen auf den Mittelpunkt M diametral zueinander angeordnet.

In Figur 1 ist eine strich-punktierte Linie mit 28 bezeichnet, die die Kante 8 schneidet und senkrecht zu der zweiten Standebene 15 verläuft. Die strich-punktierte Linie oder die Vertikale 28 schneidet dabei den Griffbereich 17, wobei ein Abschnitt 17a sich oberhalb des zweiten Standbodens 7 befindet. Der Rest des Griffbereichs 17 liegt in der Darstellung der Figur 1 links von der Vertikalen 28 und somit seitlich zum zweiten Standboden 7 und nicht mehr oberhalb von ihm.

In Umfangsrichtung des Kreises mit dem Mittelpunkt M nimmt der zweite Standboden 7 einen Winkelbereich β₂ ein, dessen Größe der Größe eines Winkelbereichs β₁ für den ersten Standboden 6 entspricht (jeweils ca. 38 Grad). Ein entsprechender Winkelbereich β₃, über den sich in Umfangsrichtung der Griffbereich 17 erstreckt, beträgt rund das Dreifache von β₁ bzw. β₂. Somit liegt das Verhältnis von β₃ zu β₂ in einem bevorzugten Bereich von 2 bis 4.

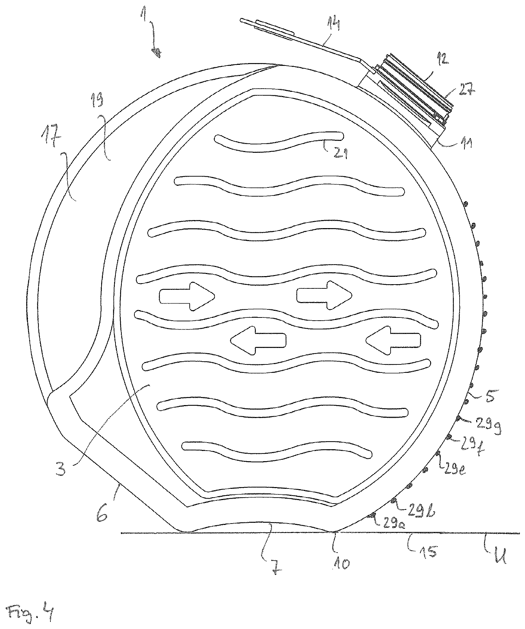

Figur 4 zeigt in der Seitenansicht ein weiteres Ausführungsbeispiel für den erfindungsgemäßen Behälter 1. Bauteile oder Merkmale in Figur 4, die zu Bauteile oder Merkmalen der Figuren 1 bis 3 ähnlich oder identisch sind, werden mit gleichen Bezugszeichen versehen. Entsprechend wird Bezug genommen auf die Figurenbeschreibung zu den Figuren 1 bis 3.

Gegenüber dem Behälter 1 der Figuren 1 bis 3 weist der Behälter 1 der Figur 4 an der Rollfläche 5 mehrere hervorstehende Elemente in Form von linienförmigen Rippen 29 auf. Die Rippen 29 erstrecken sich dabei in der Darstellung der Figur 4 senkrecht zur Zeichenebene. Wird nun ausgehend von der in Figur 4 dargestellten Lagerstellung der Behälter 1 im Uhrzeigersinn um die Kante 10 gekippt, um flüssiges Waschmittel dem Behälter 1 zu entnehmen, rollt der Behältergrundkörper 2 mit seiner Rollfläche 5 auf dem Unterboden U ab. Als erstes kommt dabei die Rippe 29a in Kontakt mit dem Unterboden U. Der Anwender, der mit seiner Hand den Griffbereich 17 umgreift und diese Kippbewegung führt, spürt das Aufsetzen der Rippe 29a auf den Unterboden, was sich als kleine Unstetigkeit in der ansonsten kontinuierlichen Abrollbewegung erfühlen lässt. Bei der Abrollbewegung über die Rollfläche 9 bilden zwei benachbarte Rippen (beispielsweise 29e und 29f) eine Stufe in der Abrollbewegung aus, die dann bei weiterem Kippen in eine nächste Stufe übergeht. Diese nächste Stufe ist dann durch die benachbarten Rippen 29f und 29g gekennzeichnet. Der Abstand benachbarter Rippen bzw. der Abstand benachbarter Stufen ist dabei so bemessen, dass beim Kippen von einer Stufe zu der nächsten Stufe aus der Öffnung 12 jeweils eine gleiche Menge an flüssigem Waschmittel ausläuft. Somit dienen die Rippen 29a, 29b etc. als Dosierhilfe für den Anwender.

In Figur 4 sind die Rippen und deren einzelnen Abstände zueinander nur schematisch dargestellt. Der Abstand der Rippen zueinander hängt dabei vom Kippwinkel des Behälters 1 bzw. zum Abstand der einzelnen Rippen zur Kante 10 ab.

In den Ausführungsbeispielen der Figuren kann der Radius R 11 bis 14 Zentimeter betragen. Die Breite B soll in einem Bereich von 9 bis 12 Zentimeter liegen.

### Bezugszeichenliste

- 1: Behälter
- 2: Behältergrundkörper
- 3: Seitenwand
- 4: Seitenwand
- 5: umlaufende Mantelwand
- 6: erster Standboden
- 7: zweiter Standboden
- 8: Kante
- 9: Rollfläche
- 10: Kante
- 11: Ausgießstutzen
- 12: Öffnung
- 13: Außengewinde
- 14: Griff
- 15: erste Standebene
- 16: zweite Standebene
- 17: Griffbereich
- 18: Punkt
- 19: erste Griffeinbuchtung
- 20: zweite Griffeinbuchtung
- 21: Vertiefung
- 22: Schlaufe
- 23: Innenkante
- 24: Angriffsmulde (Fingermulde)
- 25: Filmscharnier
- 26: feststehendes Teil
- 27: Rand
- 28: strich-punktierte Linie / Vertikale
- 29: hervorstehendes Element / Rippe

## Patentansprüche

1. Behälter (1) für flüssiges Waschmittel umfassend
- einen Behältergrundkörper (2) zur Aufnahme des Waschmittels;
- eine Öffnung (12) zur Abgabe des Waschmittels;
- einen ersten Standboden (6), der gegenüber der Öffnung (12) angeordnet ist und eine Füllstellung des Behälters (1) definiert;
- einen zweiten Standboden (7), der neben dem ersten Standboden (6) angeordnet ist und eine Lagerstellung des Behälters (1) definiert;
- einen Griffbereich (17), der sich von einer dem zweiten Standboden (7) abgewandten Seite des ersten Standbodens (6) in Richtung der Öffnung (12) erstreckt; und
- eine Rollfläche (9), die gegenüber dem Griffbereich (17) angeordnet ist und sich im Wesentlichen von dem zweiten Standboden (7) bis zur Öffnung (12) erstreckt;
wobei der Griffbereich (17) einen Abschnitt (17a) aufweist, der oberhalb des zweiten Standbodens (7) angeordnet ist, wenn der Behälter (1) in Lagerstellung auf dem zweiten Standboden (7) steht.

2. Behälter (1) nach Anspruch 1, **dadurch gekennzeichnet, dass** der erste Standboden (6) eine erste Standebene (16) und der zweite Standboden (7) eine zweite Standebene (15) definieren, wobei ein Winkel (a) zwischen erster Standebene und zweiter Standebene 20 bis 40 Grad beträgt.

3. Behälter (1) nach Anspruch 1 oder 2, **dadurch gekennzeichnet, dass** der erste Standboden (6) und der zweite Standboden (7) unmittelbar aneinander angrenzen und eine gemeinsame Kante (8) aufweisen.

4. Behälter (1) nach einem der Ansprüche 1 bis 3, **dadurch gekennzeichnet, dass** der zweite Standboden (7) eine konkave Wölbung aufweist, die mit einer konvexen Wölbung an einer dem zweiten Standboden (7) gegenüber liegenden Seite des Behältergrundkörpers (2) korrespondiert.

5. Behälter (1) nach einem der Ansprüche 1 bis 4, **dadurch gekennzeichnet, dass** die Rollfläche (9) im Wesentlichen bogenförmig mit hervorstehenden Elementen (29) ausgebildet ist, wobei jeweils zwei benachbarten Elementen (29) eine bestimmte Schwenkposition des Behälters (1) zugeordnet werden kann.

6. Behälter (1) nach einem der Ansprüche 1 bis 5, **dadurch gekennzeichnet, dass** zusätzlich zu dem Griffbereich (17) ein Griff (14) vorgesehen ist, der schwenkbar an dem Behältergrundkörper (2) angelenkt ist.

7. Behälter (1) nach Anspruch 6, **dadurch gekennzeichnet, dass** eine Schlaufe (22) des Griffs (14) einstückig über ein Filmscharnier (25) mit dem Behältergrundkörper verbunden ist.

8. Behälter (1) nach einem der Ansprüche 1 bis 7, **dadurch gekennzeichnet, dass** der Griffbereich (17) ein integraler Bestandteil des Behältergrundkörpers (2) ist.

9. Behälter (1) nach einem der Ansprüche 1 bis 8, **dadurch gekennzeichnet, dass** zur Ausbildung des Griffbereichs (17) der Behältergrundkörper (2) eine erste Griffeinbuchtung (19) an einer Seitenwand (3) und eine zweite Griffeinbuchtung (20) an einer anderen Seitenwand (4) aufweist.

10. Behälter (1) nach einem der Ansprüche 1 bis 9, **dadurch gekennzeichnet, dass** die Rollfläche (9) einen Anschlag als Wegrollschutz aufweist.

11. Verfahren zur dosierten Abgabe von Waschmittel aus einem Behälter (1), der einen Behältergrundkörper (2) zur Aufnahme des Waschmittels, eine Öffnung (12), einen ersten Standboden (6), der gegenüber der Öffnung (12) angeordnet ist und eine Füllstellung des Behälters (1) definiert, einen zweiten Standboden (7), der neben dem ersten Standboden (6) angeordnet ist und eine Lagerstellung des Behälters (1) definiert, einen Griffbereich (17), der sich von einer dem zweiten Standboden (7) abgewandten Seite des ersten Standbodens (6) in Richtung der Öffnung (12) erstreckt, und eine Rollfläche (9) umfasst, die gegenüber dem Griffbereich (17) angeordnet ist und sich im Wesentlichen von dem zweiten Standboden (7) bis zur Öffnung (12) erstreckt, insbesondere zur dosierten Abgabe von Waschmittel aus einem Behälter nach einem der Ansprüche 1 bis 10, bei welchem Verfahren die Öffnung (12), soweit verschlossen, geöffnet wird und ausgehend von der Lagerstellung der Behälter (1) in Richtung der Rollfläche (9) geschwenkt wird, bei weiterer Schwenkbewegung die Rollfläche (9) auf einem Untergrund (U) abgerollt wird und somit mit dem Untergrund (U) in Kontakt bleibt.

12. Verfahren nach Anspruch 11, **dadurch gekennzeichnet, dass** in Abhängigkeit vom Füllgrad und in Abhängigkeit vom Schwenkwinkel der Behälter-Schwenkbewegung eine den Griffbereich haltende Hand eines Anwenders des Behälters an unterschiedlichen Stellen des Griffbereichs (17) ansetzt bzw. entlang des Griffbereichs (17) entlang gleitet.

## Claims

1. A container (1) for liquid washing agent, comprising
- a main container body (2) for receiving the washing agent;
- an opening (12) for dispensing the washing agent;
- a first standing base (6) that is arranged opposite the opening (12) and defines a filling position of the container (1);
- a second standing base (7) that is arranged beside the first standing base (6) and defines a storage position of the container (1);
- a grip region (17) that extends towards the opening (12) from a side of the first standing base (6) remote from the second standing base (7); and
- a rolling surface (9) that is arranged opposite the grip region (17) and extends substantially from the second standing base (7) as far as the opening (12);
wherein the grip region (17) comprises a portion (17a) which is arranged above the second standing base (7) when the container (1) is standing on the second standing base (7) in the storage position.

2. The container (1) according to claim 1, **characterized in that** the first standing base (6) defines a first standing plane (16) and the second standing base (7) defines a second standing plane (15), an angle (α) between the first standing plane and the second standing plane being 20 to 40 degrees.

3. The container (1) according to claim 1 or 2, **characterized in that** the first standing base (6) and the second standing base (7) are directly adjacent and form a shared edge (8).

4. The container (1) according to one of claims 1 to 3, **characterized in that** the second standing base (7) has a concave portion that corresponds to a convex portion on a side of the main container body (2) opposite the second standing base (7).

5. The container (1) according to one of claims 1 to 4, **characterized in that** the rolling surface (9) is substantially curved and has projecting elements (29), it being possible for a particular pivot position of the container (1) to be assigned to each two adjacent elements (29).

6. The container (1) according to one of claims 1 to 5, **characterized in that** a handle (14) that is pivotally articulated to the main container body (2) is provided in addition to the grip region (17).

7. The container (1) according to claim 6, **characterized in that** a loop (22) of the handle (14) is formed in one piece with the main container body by means of a film hinge (25).

8. The container (1) according to one of claims 1 to 7, **characterized in that** the grip region (17) is an integral part of the main container body (2).

9. The container (1) according to one of claims 1 to 8, **characterized in that**, to form the grip region (17), the main container body (2) has a first grip indentation (19) on one side wall (3) and a second grip indentation (20) on another side wall (4).

10. The container (1) according to one of claims 1 to 9, **characterized in that** the rolling surface (9) has a stop providing roll-away prevention.

11. A method for dispensing washing agent from a container (1) in a metered manner, which container comprises a main container body (2) for receiving the washing agent, an opening (12), a first standing base (6) arranged opposite the opening (12) and defining a filling position of the container (1), a second standing base (7) arranged beside the first standing base (6) and defining a storage position of the container (1), a grip region (17) extending towards the opening (12) from a side of the first standing base (6) remote from the second standing base (7), and a rolling surface (9) arranged opposite the grip region (17) and extending substantially from the second standing base (7) as far as the opening (12), in particular for dispensing washing agent from a container according to any of claims 1 to 10, in which method the opening (12), if closed, is opened and the container (1) is pivoted from the initial storage position towards the rolling surface (9), upon further pivotal movement the rolling surface (9) being rolled onto an underlying surface (U) and thus being in contact with the underlying surface (U).

12. The method according to claim 11, **characterized in that**, depending on the fill level and on the pivot angle of the pivotal movement of the container, a hand of a user of the container holding the grip region is positioned at various points on the grip region (17) and slides along the grip region (17).

## Revendications

1. Récipient (1) pour détergent liquide comprenant
- un corps principal de récipient (2) destiné à recevoir le détergent ;
- une ouverture (12) pour distribuer le détergent ;
- un premier fond de support (6) qui est disposé face à l'ouverture (12) et qui définit une position de remplissage du récipient (1) ;
- un second fond de support (7) qui est disposé à côté du premier fond de support (6) et qui définit une position de stockage du récipient (1) ;
- une zone de poignée (17) s'étendant à partir d'un côté du premier fond de support (6) opposé au second fond de support (7) en direction de l'ouverture (12) ; et
- une surface de roulement (9) qui est disposée en face de la zone de poignée (17) et qui s'étend sensiblement à partir du second fond de support (7) jusqu'à l'ouverture (12) ;
la zone de poignée (17) présentant un section (17a) qui est disposée au-dessus du second fond de support (7) lorsque le récipient (1) est en position de stockage sur le second fond de support (7).

2. Récipient (1) selon la revendication 1, **caractérisé en ce que** le premier fond de support (6) définit un premier niveau d'appui (16) et le second fond de support (7) définit un second niveau d'appui (15), un angle (a) entre le premier niveau d'appui et le second niveau d'appui valant 20 à 40 degrés.

3. Récipient (1) selon la revendication 1 ou 2, **caractérisé en ce que** le premier fond de support (6) et le second fond de support (7) sont à proximité immédiate l'un de l'autre et présentent un bord (8) commun.

4. Récipient (1) selon l'une des revendications 1 à 3, **caractérisé en ce que** le second fond de support (7) présente une courbure concave qui correspond à une courbure convexe au niveau d'un côté du corps principal de récipient (2) positionné en face du second fond de support (7).

5. Récipient (1) selon l'une des revendications 1 à 4, **caractérisé en ce que** la surface de roulement (9) est agencée sensiblement en forme d'arc avec des éléments en saillie (29), dans lequel une position de pivotement déterminée du récipient (1) peut être attribuée à respectivement deux éléments (29) adjacents.

6. Récipient (1) selon l'une des revendications 1 à 5, **caractérisé en ce qu'**il est prévu une poignée (14) en supplément de la zone de poignée (17), qui est articulée pour pouvoir pivoter au niveau du corps principal de récipient (2).

7. Récipient (1) selon la revendication 6, **caractérisé en ce qu'**une boucle (22) de la poignée (14) est reliée en une seule pièce au corps principal de récipient par l'intermédiaire d'une charnière à film (25).

8. Récipient (1) selon l'une des revendications 1 à 7, **caractérisé en ce que** la zone de poignée (17) fait partie intégrante du corps principal de récipient (2).

9. Récipient (1) selon l'une des revendications 1 à 8, **caractérisé en ce que** pour former la zone de poignée (17), le corps principal de récipient (2) présente une première échancrure de poignée (19) sur une paroi latérale (3) et une seconde échancrure de poignée (20) sur une autre paroi latérale (4).

10. Récipient (1) selon l'une des revendications 1 à 9, **caractérisé en ce que** la surface de roulement (9) présente une butée en tant que protection anti-roulement.

11. Procédé de distribution dosée de détergent à partir d'un récipient (1) comprenant un corps principal de récipient (2) pour contenir le détergent, une ouverture (12), un premier fond de support (6) disposé en face de l'ouverture (12) et définissant une position de remplissage du récipient (1), un second fond de support (7) disposé à côté du premier fond de support (6) et définissant une position de stockage du récipient (1), une zone de poignée (17) s'étendant à partir d'un côté du premier fond de support (6) opposé au second fond de support (7) en direction de l'ouverture (12), et une surface de roulement (9), qui est disposée en face de la zone de poignée (17) et qui s'étend sensiblement du second fond de support (7) jusqu'à l'ouverture (12), en particulier de distribution dosée de détergent à partir d'un récipient selon l'une des revendications 1 à 10, ledit procédé consistant à faire ouvrir l'ouverture (12), dans la mesure où celle-ci est bouchée, et à la faire pivoter dans la direction de la surface roulante (9) en partant de la position de stockage du récipient (1), à faire dérouler la surface roulante (9) sur un sol (U) en cas d'un autre mouvement de pivotement et reste ainsi en contact avec le sol (U).

12. Procédé selon la revendication 11, **caractérisé en ce qu'**en fonction du niveau de remplissage et en fonction de l'angle de pivotement du mouvement de pivotement du récipient, une main d'un utilisateur du récipient tenant la zone de poignée se place au niveau de différents points de la zone de poignée (17) ou glisse le long de la partie de poignée (17).
